# EUROPÄISCHE PATENTSCHRIFT

(11) **EP 0 941 401 B1**
(45) Veröffentlichungstag und Bekanntmachung des Hinweises auf die Patenterteilung: **18.12.2002**
(21) Anmeldenummer: 98943635.7
(22) Anmeldetag: 03.07.1998
(51) Int. Cl.: F02M 59/46

(54) **VENTIL ZUM STEUERN VON FLÜSSIGKEITEN**
LIQUID CONTROL VALVE
SOUPAPE DE COMMANDE DE LIQUIDES

(30) Priorität: 02.10.1997 DE 19743669
(43) Veröffentlichungstag der Anmeldung: 15.09.1999
(73) Patentinhaber: ROBERT BOSCH GMBH, 70442 Stuttgart (DE)
(72) Erfinder: KIENZLER, Dieter, D-71229 Leonberg (DE); SCHMOLL, Klaus-Peter, D-74251 Lehrensteinsfeld (DE); BOECKING, Friedrich, D-70499 Stuttgart (DE)
(86) Internationale Anmeldenummer: DE9801838
(87) Internationale Veröffentlichungsnummer: WO99018348

(56) Entgegenhaltungen:
- EP-A- 0 477 400
- DE-A- 4 442 649
- US-A- 5 186 151
- PATENT ABSTRACTS OF JAPAN vol. 013, no. 420 (M-872), 19. September 1989 & JP 01 159426 A (NIPPON DENSO CO LTD), 22. Juni 1989

## Beschreibung

### Stand der Technik

Die Erfindung betrifft ein Ventil zum Steuern von Flüssigkeiten gemäß der Gattung des Patentanspruches 1. Durch die US 5 186 151 ist ein solches Ventil bekannt. Dort ist dargestellt, daß es bei einer Anordnung gemäß der Gattung des Patentanspruchs 1 problematisch ist, die Kolben hinreichend dicht in den zugehörigen Zylindern anzuordnen, damit keine Leckverluste auftreten und es aufwendig ist, eine entsprechende Kompensationseinrichtung bereitzustellen, die auftretende Leckverluste ausgleichen muß. Bei der bekannte Ausgestaltung wird zur Lösung des Problem auf eine Elastomerschicht zurückgegriffen über die die Bewegung des im Durchmesser größeren Kolben auf den im Durchmesser kleineren Kolben übertrage wird, ohne daß es zu Übertragungswegverlusten kommt. Aber auch die Bereitstellung eines solchen Medium, das auch Alterungen unterliegt und die daran angepaßte Konstruktion ist aufwendig.

### Vorteile der Erfindung

Das erfindungsgemäße Ventil mit den kennzeichnenden Merkmalen des Hauptanspruches hat dem gegenüber den Vorteil, daß auf einfache Weise eine Befüllung des Kopplungsraumes über eine Ventilfunktion erreicht ist und daß damit der Übersetzungskolben und der das Ventil betätigende Kolben immer auf gleichem Abstand voneinander bleiben. Des weiteren ist es vorteilhaft, daß die Befüllung des Kopplungsraumes mit einfachen Mitteln erreichbar ist.

### Zeichnung

Ein Ausführungsbeispiel der Erfindung ist in der Zeichnung dargestellt und wird in der nachfolgenden Beschreibung näher erläutert. Es zeigen: Figur 1 ein Kraftstoffeinspritzventil im Schnitt, Figur 2 eine Kolbenanordnung an einem Kopplungsraum, und Figur 3 ein Druckdiagramm.

### Beschreibung des Ausführungsbeispiels

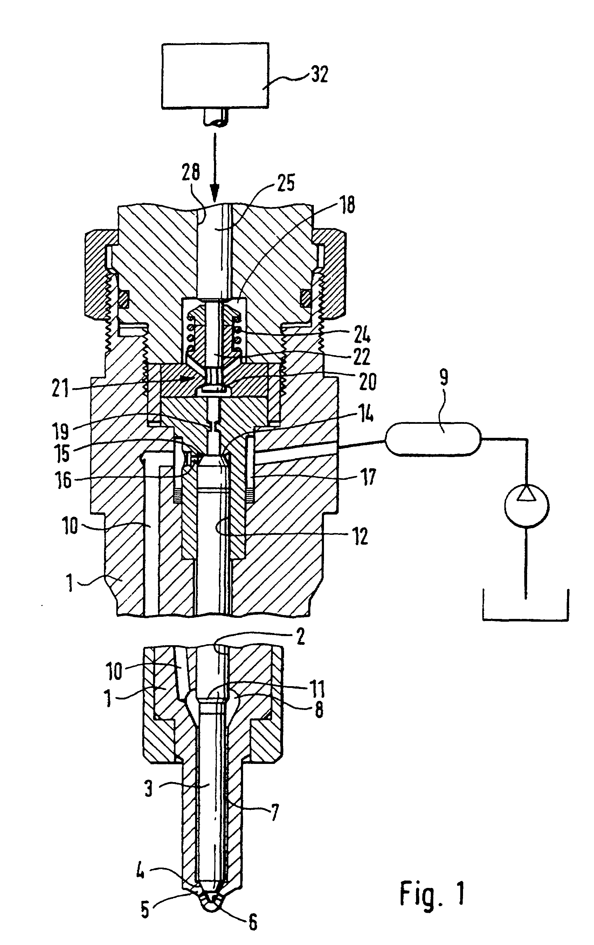

Das erfindungsgemäße Ventil findet Anwendung bei einem Kraftstoffeinspritzventil, das in wesentlichen Teilen im Schnitt in der Figur 1 wiedergegeben ist. Dieses Einspritzventil weist ein Ventilgehäuse 1 auf, in dem in einer Längsbohrung 2 eine Ventilnadel 3 geführt ist, die auch in hier nicht weiter gezeigter, bekannter Weise durch eine Schließfeder in Schließrichtung vorbelastet sein kann. An ihrem einen Ende ist die Ventilnadel mit einer kegelförmigen Dichtfläche 4 versehen, die an der in den Brennraum ragenden Spitze 5 des Ventilgehäuses mit einem Sitz 6 zusammen wirkt, von dem aus Einspritzöffnungen abführen, die in das Innere des Einspritzventils, hier den die Ventilnadel 3 umgebenden unter Einspritzdruck stehenden Kraftstoff gefüllten Ringraum 7 mit dem Brennraum verbinden, um so eine Einspritzung zu vollziehen, wenn die Ventilnadel von ihrem Sitz abgehoben hat. Der Ringraum ist mit einem weiteren Druckraum 8 verbunden, der ständig in Verbindung mit einer Druckleitung 10 steht, über die dem Kraftstoffeinspritzventil von einem Kraftstoffhochdruckspeicher 9 Kraftstoff unter Einspritzdruck zugeführt wird. Dieser hohe Kraftstoffdruck wirkt auch in den Druckraum 8, und dort auf eine Druckschulter 11, über die in bekannter Weise die Düsennadel bei geeigneten Bedingungen von ihrem Ventilsitz abgehoben werden kann.

Am anderen Ende der Ventilnadel ist diese in einer Zylinderbohrung 12 geführt und schließt dort mit ihrer Stirnseite 14 einen Steuerdruckraum 15 ein, der über eine Drosselverbindung 16 ständig mit einem Ringraum 17 verbunden ist, der, wie auch der Druckraum 8 immer mit dem Kraftstoffhochdruckspeicher in Verbindung steht. Axial führt von Steuerdruckraum 15 eine Drosselbohrung 19 ab zu einem Ventilsitz 20 eines Steuerventils 21. Mit dem Ventilsitz wirkt ein Ventilglied 22 des Steuerventils zusammen, das in abgehobenem Zustand eine Verbindung zwischen dem Steuerdruckraum 15 und einem Federraum 18 herstellt, der wiederum ständig mit einem Entlastungsraum verbunden ist. In dem Federraum 18 ist eine das Ventilglied 22 in Schließrichtung belastende Druckfeder 24 angeordnet, die das Ventilglied 22 auf den Ventilsitz 20 hin beaufschlagt, so daß in Normalstellung des Steuerven-tils diese Verbindung des Steuerdruckraumes 15 verschlossen ist. Da die stirnseitige Fläche der Ventilnadel 3 im Bereich des Steuerdruckraumes größer ist als die Fläche der Druckschulter 11, hält derselbe Kraftstoffdruck im Steuerdruckraum, der auch in dem Druckraum 8 vorherrscht nun die Ventilnadel 3 in geschlossener Stellung. Ist das Ventilglied 22 jedoch abgehoben, so wird der Druck im über die Drosselverbindung 16 abgekoppelten Steuerdruckraum 15 entlastet. Bei der nun fehlenden oder reduzierten Schließkraft öffnet die Ventilnadel 3 ggfs. entgegen der Kraft einer Schließfeder schnell und kann andererseits sobald das Ventilglied 22 wieder in Schließstellung kommt, in Schließstellung gebracht werden, da sich von diesem Zeitpunkt an über die Drosselverbindung 16 der ursprüngliche hohe Kraftstoffdruck im Steuerdruckraum 15 dann schnell wieder aufbaut.

Das erfindungsgemäße Steuerventil weist einen zu seiner Betätigung bestimmten Kolben 25 auf, der auf das Ventilglied 22 wirkt und durch einen Piezoaktor 32 betätigbar ist. Der Kolben 25 ist in einer Führungsbohrung 28 unter Inkaufnahme eines Führungsspaltes 33 geführt und begrenzt mit seiner Stirnfläche 29 einen Kopplungsraum 30, der auf seiner gegenüberliegenden Wand von einem Übersetzungskolben 35 größeren Durchmessers abgeschlossen ist, welcher Übersetzungskolben 35 von einem Piezoaktors 32 betätigt wird und durch eine im Kopplungsraum 30 angeordente Federscheibe 41 in Kontakt mit dem Piezoaktor 32 gehalten wird. Der Übersetzungskolben 35 ist in einer Gehäusebohrung 46 geführt und weist dieser gegeüber eine Führungsspalt 45 auf.

Der Kopplungsraum 30 dient aufgrund der unterschiedlichen Kolbenflächen der beiden Kolben 25 und 35 als Übersetzerraum, indem er einen konstruktionsbedingten kleinen Hub des Piezoaktorkolbens 32 in einen größeren Hub des das Steuerventil 21 betätigenden Kolbens 25 übersetzt. Bei Erregung des Piezoaktors 32 wird der Kolben 25 so verstellt daß das Ventilglied 22 von seinem Sitz 20 abgehoben. Das hat eine Entlastung des Steuerdruckraumes zur Folge, was wiederum das Öffnen der Ventilnadel 3 bewirkt.

Der Piezoaktor 32 hat ein dem Ventilglied 22 zugekehrtes Ende 34, das in eine Axialbohrung 43 des Übersetzungskolben 35 eintaucht. Dabei läßt die Axialbohrung 43 zwischen sich und dem Piezoaktor 32 einen Ringzylinder 36 frei, der als Befüllungszulauf dient. Die Axialohrung 43 geht zur Seite des Kopplungsraumes 30 über eine vorzugsweise konische Ringschulter 37 in eine axiale Füllbohrung 44 über, die den Ringraum mit dem Kopplungsraum verbindet. Die Ringschulter 37, ist als Ventilsitz 38 für den Piezoaktor 32 ausgebildet, der mit diesem zusammen ein Füllventil 39 bildet. Ein unteres Ende 34 des Piezoaktors 32 weist dazu eine kegelige Dichtfläche 40 auf die zur Anlage auf den Ventilsitz kommt und so die Verbindung zwischen Kopplungsraum 30und Ringzylinder 36 unterbricht.

Die Blattfeder 41 im Kopplungsraum 30 abstützt sich an einer Gehäuseschulter 42, und ist bestrebt, den Übersetzungskolben 35 mit seinem Ventilsitz 38 gegen die Dichtfläche 40 zu drücken und damit das Füllventil 39 geschlossen zu halten.

Ein dem Kopplungsraum 30 zugekehrter Bereich 47 des Übersetzungskolbens 35 ist auf einen kleineren Durchmesser reduziert und weist gegenüber der Gehäusebohrung 46 ein verhältnismäßig großes Spiel 48 auf. Damit wird die Gefahr eines Klemmens des Übersetzungskolbens 35 in seiner Führung durch Aufweiten des unteren weniger steifen Bereiches verhindert.

Das Hubvermögen des Piezoaktors 32 ist sehr klein und wird mit Hilfe des hydraulischen Übersetzung über den hydraulischen Kopplungsraum 30 als größerer Hub auf den Kolben 25 übersetzt. Gleichzeitig wird die thermische Dehnung der Einrichtung durch diese hydraulische Übersetzung aufgenommen. Beim Zusammendrücken der Einrichtung wird im Kopplungsraum 30 ein starker Druck erzeugt, der bewirkt, daß über die Führungsspalte 33 und 45 eine Leckage entsteht, die durch Befüllung des Kopplungsraumes 30 wieder ausgeglichen werden muß, damit dieser bei mehreren Hüben nicht leergepumpt wird.

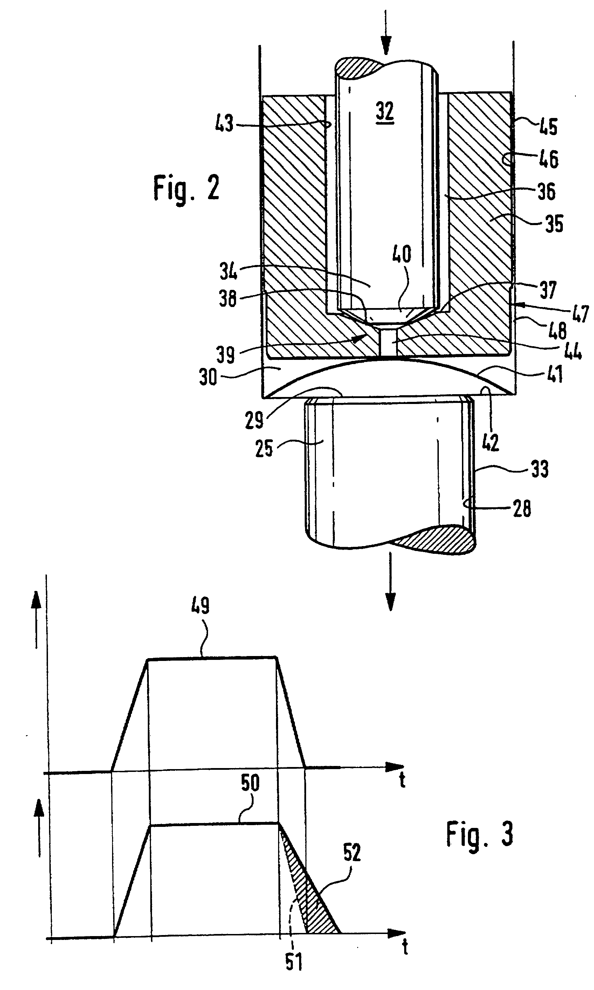

In der Figur 3 ist anhand eines Diagramms dargestellt, wie die Hübe des Piezoaktors 32 und des Übersetzungskolbens 35 über der Zeit unterschiedlich ablaufen. Der Übersetzungskolben kann wegen seiner Masse und seiner Flüssigkeitsverdrängung dem sich äußerst schnell verstellenden Piezoaktor nicht genauso schnell folgen. Im oberern Teil des Diagramm ist eine Kurve 49 gezeigt, die den Weg des Piezoaktors 32 aufzeigt, darunter ist eine Kurve 50 gezeigt, die den Weg des Übersetzungskolbens 35 darstellt, der der Bewegung des Piezoaktors nicht zeitgeleich folgen kann. Die Differenz der Bewegung beider Kolben ist mit der gestrichelten Linie 51 in der unteren Kurve eingetragen und symbolisiert als Dreiecksfläche 52 den Zeitraum der Befüllung.

Anhand des Diagramms ist zu erkennen, daß der Übersetzungskolben 35 in Verlauf seines Hin- und Herhubes bei seinem durch die Verkürzung des Piezoaktors 32 ausgelösten Rückhub gegenüber dem Piezoaktor 32 eine Relativbewegung ausführt, daß er also eine andere Hubgeschwindigkeit hat als der Piezoaktor. Dies resultiert in einem Abheben des Übersetzungskolbens mit seinem Ventilsitz 37 vom Piezoaktor 32 und seiner Dichtfläche 40 und einem Öffnen der Füllbohrung 44. Dies führt dann zur Wiederauffüllung des Kopplungsraumes 30.

Die Wiederbefüllung erfolgt bei jedem Hub und zwar bei der Schließbewegung des Einspritzventils, dann wenn der Piezoaktor schnell zurückgezogen wird, so schnell, daß sich sein Schließglied 40 von seinem Ventilsitz 38 am Übersetzungskolben 35 abhebt.

Über das nun geöffnete Füllventil 39 gelangt Flüssigkeit durch den Ringzylinder 36 hindurch in den Kopplungsraum 30. Am Ende der Hubbewegung beider Kolben 31 und 35 wird das Füllventil 39 durch die Feder 41 selbsttätig wieder geschlossen.

## Patentansprüche

1. Ventil zum Steuern von Flüssigkeiten mit einem Ventilglied (22), das gegen die Kraft einer Feder (24), durch einen zu seiner Betätigung bestimmten Kolben (25) betätigbar ist, der mit seiner Stirnseite einen hydraulischen Kopplungsraum (30) als bewegliche Wand abschließt, welcher Kopplungsraum (30) andererseits von der Stirnseite eines einem größeren Durchmesser als der des Kolbens aufweisenden, von einem Piezoaktors (32) betätigbarem Übersetzungskolben (35) begrenzt wird, durch dessen Arbeitshub eine Druckerhöhung im Kopplungsraum (30) erzeugbar ist, durch die der Kolben (25) gegen die Kraft der Druckfeder (24) verstellbar ist, wobei der Übersetzungskolben (30) relativ zum Piezoaktor (32) Verstellbar ist, so daß dieser im Verlauf seiner Hubbewegung gegenüber dem Piezoaktor (32) eine Relativbewegung ausführen kann, **dadurch gekennzeichnet, daß** der Übersetzungskolben (35) mit dem Piezoaktor zusammen ein Ventil (39) bildet, durch das der Kopplungsraum (30) mit einer Flüssigkeitsquelle (36) verbindbar ist.

2. Ventil nach Anspruch 1, **dadurch gekennzeichnet, daß** der Übersetzungskolben (35) eine andere Hubgeschwindigkeit hat als der Piezoaktor (32) und daß die Geschwindigkeits-Differenz zum Öffnen des Füllventils (39) und zum Befüllen von Flüssigkeit in den Kopplungsraum (30) genutzt wird.

3. Ventil nach Anspruch 1 oder 2, **dadurch gekennzeichnet, daß** der Übersetzungskolben (35) ein dem Ventilglied (22) zugekehrtes Ende (34) hat, das den Piezoaktors (32) unter Freilassen eines Ringzylinders (36) als Befüllungszulauf konzentrisch umgibt und eine innere Ringschulter (37) aufweist, die als Ventilsitz (38) mit den Piezoaktorende als Ventilglied zusammen ein Füllventil (39) bildet das eine Füllbohrung (44) steuert, die den Ringzylinder (36) mit dem Kopplungsraum (30) verbindet.

4. Ventil nach Anspruch 3, **dadurch gekennzeichnet, daß** das Ende (34) des Piezoaktors (32) als Schließglied (40) des Füllventils (39) ausgebildet ist.

5. Ventil nach Anspruch 3 oder 4, **dadurch gekennzeichnet, daß** der Übersetzungskolben (35) durch die Kraft einer Feder (41), die sich an einer Gehäuseschulter (42) abstützt, zum Piezoaktor hin beaufschlagt wird, die den Übersetzungkolben (35) bei einem Rückhub des Piezoaktors (32) diesem nachführt.

6. Ventil nach einem der Ansprüche 3 bis 5, **dadurch gekennzeichnet, daß** der Übersetzungskolben (35) eine zur Aufnahme des Piezoaktors (32) bestimmte große Bohrung (43) aufweist, die sich zum Kopplungsraum (30) hin in die Füllbohrung (44) fortsetzt, und daß die den Ventilsitz bildende Ringschulter (37) vom Übergang zwischen den beiden Bohrungen (43, 44) liegt.

7. Ventil nach einem der Ansprüche 1 bis 6, **dadurch gekennzeichnet, daß** der Übersetzungskolben (35) unter Belassen eines engen Führungsspaltes (45) in einer Gehäusebohrung (46) geführt ist und daß ein dem Kopplungsraum (30) zugekehrter, unterer Bereich (47) des Übersetzungskolbens (35) auf einem kleineren Außendurchmesser reduziert ist, der gegenüber der Gehäusebohrung (46) ein verhältnismäßig großes Spiel aufweist.

## Claims

1. Valve for controlling liquids with a valve element (22) which can be actuated, counter to the force of a spring (24), by a piston (25) intended for actuating the element, the end face of which piston, as a movable wall, closes off a hydraulic connecting space (30), which connecting space (30) is on the other side delimited by the end face of a transmission piston (35) which has a diameter greater than that of the piston, can be actuated by a piezo-actuator (32) and by the working stroke of which an increase in pressure can be brought about in the connecting space (30), by which increase the piston (25) can be displaced counter to the force of the compression spring (24), the transmission piston (35) being displaceable relative to the piezo-actuator (32), so that the transmission piston can, in the course of its stroke movement, perform a relative movement in relation to the piezo-actuator (32), **characterized in that** the transmission piston (35), together with the piezo-actuator, forms a valve (39) by which the connecting space (30) can be connected to a liquid source (36).

2. Valve according to Claim 1, **characterized in that** the transmission piston (35) has a stroke speed which differs from that of the piezo-actuator (32), and **in that** the speed difference is used for opening the filling valve (39) and for filling liquid into the connecting space (30).

3. Valve according to Claim 1 or 2, **characterized in that** the transmission piston (35) has an end facing the valve element (22), which end concentrically surrounds the piezo-actuator (32), leaving an annular cylinder (36) free as a filling inlet, and has an inner annular shoulder (37) which as a valve seat (38), together with the piezo-actuator end as a valve element, forms a filling valve (39) which controls a filling bore (44) which connects the annular cylinder (36) to the connecting space (30).

4. Valve according to Claim 3, **characterized in that** the end (34) of the piezo-actuator (32) is designed as a closing element (40) of the filling valve (39).

5. Valve according to Claim 3 or 4, **characterized in that** the transmission piston (35) is acted on towards the piezo-actuator by the force of a spring (41) which is supported against a housing shoulder (42) and which, when a return stroke of the piezo-actuator (32) takes place, guides the transmission piston (35) after the piezo-actuator.

6. Valve according to one of Claims 3 to 5, **characterized in that** the transmission piston (35) has a large bore (43) which is intended for receiving the piezo-actuator (32) and which continues towards the connecting space (30) into the filling bore (44), and **in that** the annular shoulder (37) forming the valve seat lies at the transition between the two bores (43, 44).

7. Valve according to one of Claims 1 to 6, **characterized in that** the transmission piston (35) is guided in a housing bore (46), leaving a narrow guide gap (45), and **in that** a lower region (47), facing the connecting space (30), of the transmission piston (35) is reduced to a smaller outside diameter which has a relatively great clearance in relation to the housing bore (46).

## Revendications

1. Soupape de commande de liquide à l'aide d'un organe de soupape (22) actionné contre la force d'un ressort (24) par un piston (25) dont l'actionnement est défini, ce piston fermant par sa face frontale une chambre de couplage hydraulique (30) comme cloison mobile, cette chambre de couplage (30) étant d'autre part délimitée par la face frontale d'un piston démultiplicateur (35) actionné par un actionneur piézo-électrique (32) et ayant un diamètre plus grand que celui du piston, la course active du piston démultiplicateur créant une augmentation de pression dans la chambre de couplage (30) qui déplace le piston (25) contre la force du ressort de compression (24), le piston démultiplicateur (30) étant mobile par rapport à l'actionneur piézo-électrique (32) de façon qu'au cours de sa course par rapport à l'actionneur piézo-électrique (32) celui-ci puisse exécuter un mouvement relatif,
**caractérisée en ce que**
le piston démultiplicateur (35) constitue avec l'actionneur piézo-électrique une soupape (39) qui peut relier la chambre de couplage (30) à une source de liquide (36).

2. Soupape selon la revendication 1,
**caractérisée en ce que**
le piston démultiplicateur (35) a une vitesse de translation différente de celle de l'actionneur piézo-électrique (32) et la différence de vitesse est utilisée pour ouvrir la soupape de remplissage (39) et remplir de liquide la chambre de couplage (30).

3. Soupape selon l'une quelconque des revendications 1 ou 2,
**caractérisée en ce que**
le piston démultiplicateur (35) a une extrémité (34) tournée vers l'organe de soupape (22), qui entoure l'actionneur piézo-électrique (32) concentriquement en laissant libre un cylindre annulaire (36) comme alimentation de remplissage, et qui a un épaulement annulaire intérieur (37) qui en tant que siège de soupape (38) forme avec l'extrémité de l'actionneur comme organe de soupape, une soupape de remplissage (39) commandant un perçage de remplissage (44) reliant le cylindre annulaire (36) à la chambre de couplage (30).

4. Soupape selon la revendication 3,
**caractérisée en ce que**
l'extrémité (34) de l'actionneur piézo-électrique (32) est en forme d'organe d'obturation (40) de la soupape de remplissage (39).

5. Soupape selon l'une quelconque des revendications 3 ou 4,
**caractérisée en ce que**
le piston démultiplicateur (35) est sollicité vers l'actionneur piézo-électrique par la force d'un ressort (41) s'appuyant contre un épaulement (42) du boîtier et qui entraîne le piston démultiplicateur (35) lors d'une course de retour de l'actionneur piézo-électrique (32).

6. Soupape selon l'une quelconque des revendications 3 à 5,
**caractérisée en ce que**
le piston démultiplicateur (35) présente un perçage (43) de dimensions déterminées pour recevoir l'actionneur piézo-électrique (32), ce perçage se poursuivant dans le perçage de remplissage (44) vers la chambre de couplage (30), et
l'épaulement annulaire (37) qui forme le siège de soupape se situe à la transition entre les deux perçages (43, 44).

7. Soupape selon l'une quelconque des revendications 1 à 6,
**caractérisée en ce que**
le piston démultiplicateur (35) est guidé dans un perçage (46) du boîtier en laissant un étroit intervalle de guidage (45), et une zone inférieure (47) du piston démultiplicateur (35) tournée vers la chambre de couplage (30), est réduite à un diamètre extérieur plus petit qui présente un jeu relativement important par rapport au perçage (46) du boîtier.
